# EUROPEAN PATENT SPECIFICATION

(11) **EP 2 977 275 B1**
(45) Date of publication and mention of the grant of the patent: **26.04.2017**
(21) Application number: 14465515.6
(22) Date of filing: 25.07.2014
(51) Int. Cl.: B60S 1/08

(54) **Rain detection device**
Regendetektionsvorrichtung
Dispositif de détection de pluie

(43) Date of publication of application: 27.01.2016
(73) Proprietor: Conti Temic microelectronic GmbH, 90411 Nürnberg (DE); Continental Automotive GmbH, 30165 Hannover (DE)
(72) Inventor: Ashrafi, Mina, 89075 Ulm (DE); Krökel, Dieter, 88097 Eriskirch (DE); Botusescu, Adrian, 300507 Timisoara (RO)

(56) References cited:
- EP-A2- 1 580 092
- WO-A1-2012/092911
- WO-A1-2013/163991
- WO-A1-2014/108123

## Description

### Technical field

The present invention relates to rain detection in vehicles. In particular, the present invention relates to a rain detection device and a vehicle.

### Background of the invention

Nowadays, vehicles can include a rain detection functionality for automatically turning the windshield wipers on and off as well as for regulating the frequency of the windshield wipers. There are different possibilities for measuring the rain intensity. One way for measuring the rain intensity is to measure reflections of a light beam on the windscreen of the vehicle. For example, there are systems for rain detection in vehicles which are designed to work together with a front facing camera of the vehicle.

WO 2012/092911 A1 describes a device for detecting rain according to the preamble of claim 1, which device comprises a camera and a lighting source.

### Summary of the invention

It is an object of the invention to provide an improved and more reliable rain detection device.
This object and further objects are achieved by the subject-matter of the independent claims. Further embodiments and advantages are set out in the respective dependent claims.
According to an exemplary embodiment, a rain detection device for a vehicle is presented. The rain detection device comprises a camera, a light source for emitting light for rain detection, a light sensor for measuring an ambient light level, and a light guide. The light guide is configured for redirecting the light emitted by the light source. Furthermore, the light guide is configured for directing ambient light to the light sensor.

It has to be noted that the present invention can also relate to a vehicle comprising a rain detection device described in the context of the present invention.

In this way, the same light guide can be used for guiding the light of the light source for rain detection and for guiding ambient light to the light sensor. In other words, the present invention may relate to a rain detection and a light detection device which uses the identical light guide for both functionalities. By providing the ambient light measuring function, the rain detection device can be improved. For example, the measured ambient light level or intensity can be used for calibrating the rain detection device. The feature of measuring the ambient light level can also be understood as detecting the ambient light intensity. Moreover, the ambient light level may also be used for other functionalities, for example, for headlamp control, for display illumination control, and/or for head-up display settings. For example, the light sensor can be embodied as a photodiode.

A gist of the invention can thus be seen in further measuring the intensity of the ambient light in the vehicle by a rain detection device, hereby using the same light guide for guiding the outgoing light of the light source and for guiding the ambient light from the outside of the vehicle to the light sensor. In other words, the light guide can be used for guiding light in two directions. I.e., the light from the light source is guided from the rain detection device to the windshield and the ambient light is guided from the outside of the vehicle to the light sensor that can be located within a housing of the rain detection device, wherein the camera can be integrated in the housing of the rain detection device. A benefit is that the housing of the rain detection device does not require two openings and two light guides. Thus, the present invention improves the housing in terms of protection against environmental damage and electromagnetic emissions, saves costs as well as material, and improves processes in manufacturing.

The rain detection device can be an independent system of the vehicle. Moreover, the rain detection device can also be integrated in or be part of a driver assistance system of a vehicle. For example, the camera can be used by the driver assistance system for recording driver assistance images. The rain detection capability may thus be added to an existing driver assistance system having a camera. The present invention can thus also relate to an extension kit for a driver assistance system for adding rain detection capabilities to an existing driver assistance system. The vehicle can be a car, a truck, a motorbike, or any other vehicle having a windshield or window where rain detection capabilities are relevant. As mentioned before, the camera can be part of a driver assistance system. For driver assistance applications, the camera can have a focus at infinity or near infinity. The camera can be installed in the inside of the vehicle and/or can be directed to a windscreen or window of the vehicle. For example, the camera is a digital camera having a CMOS chip. Moreover, the rain detection device can be attached to an inside of the windscreen of the vehicle between the windscreen and the interior mirror.

The light source can be embodied as a light bulb or light emitting diode and can be controlled by the rain detection device. The light source can be configured for emitting a light cone which shall be understood in a broad sense, i.e. the light cone does not have to be an exact cone but merely describes the spatial emitting characteristics of the light source. Moreover, the light cone can have a peak intensity along a direction. In addition, the light cone can also be defined in terms of an opening angle. For example, the opening angle can be understood to be the angle of the light-cone, where the light cone has half intensity with regard to the peak intensity of the light cone. In other words, the opening angle can correspond to a half width of the light cone. The light guide shall be understood as a device for redirecting the light of the light source. For example, the light guide can be embodied as a solid state structure formed out of clear plastic. In other words, the light guide can comprise a prism-like shape. Furthermore, the light guide can comprise a coupling side and an exit side, wherein the coupling side of the light guide can be configured for being optically coupled to the light source. The term "optically coupled" shall be understood such that a major part of the light cone of the light source is transmitted to the light guide and is guided by the light guide. The exit side of the light guide can be configured for emitting the redirected and narrowed light cone. By redirecting the light cone, the direction of the peak intensity of the light cone can be changed. In other words, the light cone can be tilted by the light guide. Narrowing the light cone can imply that the opening angle of the light cone is reduced by the light guide.
For example, a rain drop or any other precipitation can cause a change in a reflection of the light cone from the outer side of the windshield or window, which reflection will be denoted as second reflection further below. A change of the second reflection can thus be an indication of rain. Moreover, the rain detection device can also detect other forms of precipitation, which makes the device more effective.

According to an exemplary embodiment, the light guide comprises a coupling side and an exit side, wherein the coupling side is optically coupled to the light source and the light sensor. Furthermore, the light guide is configured for guiding light emitted by the light source from the coupling side to the exit side. Moreover, the light guide is configured for guiding ambient light from the exit side to the coupling side and further to the light sensor.

In other words, the light guide can be configured for guiding the light of the light source along a first direction and for guiding ambient light along a second direction, which is inverse to the first direction. Thus, the light guide can be used for guiding light along both directions.

According to a further exemplary embodiment, the rain detection device further comprises a housing having an opening, wherein the light source and the light sensor are disposed inside the housing. The light guide is configured to guide the light emitted by the light source through said opening. Moreover, the light guide is configured to guide ambient light through said opening to the light sensor.

In this way, the housing of the rain detection device requires only one opening for both functionalities, for emitting light for rain detection and for measuring ambient light. Thus, the electronics of the rain detection device is better protected from dust and moisture because only one opening is needed. Moreover, the rain detection device can also provide a better electromagnetic compatibility and less electromagnetic emissions because of the single openings used. In addition, manufacturing effort and expense can be reduced.

According to a further exemplary embodiment, the rain detection device is configured to only measure an ambient light intensity by the light sensor when the light source is turned off.

Moreover, the rain detection device can be configured for turning the light sources on and off. The ambient light level can be more accurately measured since no other light is guided in the light guide.

According to a further exemplary embodiment, the rain detection device is configured for switching on and off the light sensor for rain detection with a frequency greater or equal to 4 Hz.

In other words, the data frames for the rain detection and for the light detection can be timed in a manner that the ambient light sensor only detects the light when the light sources are off.

According to a further exemplary embodiment, the rain detection device is configured for calibrating the light sensor by means of a calibration factor, wherein the calibration factor takes into account transmission losses of the light guide.

In other words, a calibration factor can be added to the light detected by the ambient light detector due to transmission losses in the light guide. In this way, the ambient light level can be more accurately measured.

According to a further exemplary embodiment, the light sensor is a photodiode, and the light source is a light-emitting diode. For example, the light sensor and/or the light source can be a standard electronic component.

According to a further exemplary embodiment, the light guide is configured such that the light sensor has an effective opening angle amounting to at least 50 degrees.

In other words, the light guide can be configured such that ambient light is collected with an opening angle of 50 degrees or more. The effective opening angle can denote the greatest possible angle of incoming ambient light rays which are still guided to the light sensor. In this way a reliable detection of the ambient light level can be ensured.

According to a further exemplary embodiment, the light guide is formed out of transparent plastic, preferably Polycarbonate (PC).

Furthermore, a vehicle comprising a windscreen or a window and a rain detection device described in the context of the present invention is presented. Furthermore, the light source, the light guide, and the camera are arranged and configured such that the light emitted by the light guide is redirected to a region of the windscreen or window.

The camera can be configured for recording the first reflection and the second reflection of the redirected light cone. Moreover, the light source, the light guide and the camera can be configured such that the first and second reflections can be separated from each other. For example, there can be a distance between the first and second reflections such that the camera may distinguish the first and second reflections. By analyzing the first and second reflections, rain or another form of precipitation can be detected by the rain detection device.

According to a further exemplary embodiment, the rain detection device further comprises a processing unit. Furthermore, the light source, the light guide, and the camera are arranged and configured such that a first reflection of the emitted light is reflected from an inner side of the windscreen or window to the camera. Moreover, the light source, the light guide, and the camera are arranged and configured such that a second reflection of the light emitted by the light source is reflected from an outer side of the windscreen or window to the camera. The processing unit is configured for detecting rain based on a change in the second reflection of the emitted light recorded by the camera.

For example, a rain drop or any other precipitation can cause a change in the reflection of the light cone from the outer side of the windshield or window, i.e. the second reflection. A change of the second reflection can thus be an indication of rain. Moreover, the rain detection device can also detect other forms of precipitation, which makes the device more effective.

According to a further exemplary embodiment, the processing unit is configured for calibrating the rain detection device based on the first reflection of the emitted light.

The first reflection may not be substantially influenced by the presence or absence of rain. Therefore, the first reflection can be used for calibrating the rain detection system.

According to a further exemplary embodiment the vehicle comprises a driver assistance system, wherein the driver assistance system is configured for using the ambient light level measured by the light sensor for headlamp control, display illumination control head-up display settings, and/or tunnel recognition.

Thus, the measured ambient light level can be used for different applications such as for driver assistance.

According to a further exemplary embodiment, the camera is part of a driver assistance system of the vehicle, wherein the camera is further configured for recording a driver assistance image. Furthermore, the light source, the light guide, and the camera are configured such that reflections of the emitted light from the windscreen or window and the driver assistance image do not overlap.

In this way, the camera can be simultaneously used for driver assistance and for rain detection. The camera can have an infinite or near-infinite focus for creating driver assistance images. Hereby, driver assistance images may denote images that are used or processed for generating driver assistance data.

Furthermore, a method for detecting rain in a vehicle is presented. The method comprises the steps of emitting light with a light source in the vehicle and redirecting the light emitted by the light source to a region of a windshield or window of the vehicle by a light guide. Furthermore, the method includes recording an image of the region of the windshield or window by a camera for rain detection and measuring an ambient light level by a light sensor, wherein ambient light is directed to the light sensor by the light guide.

This method can, for example, be carried out by a rain detection device described in the context of the present invention. Features and advantages that are described with respect to the rain detection device and/or the vehicle can also apply to the method. The steps of the method can be executed in the order presented. Moreover, the steps of the method can be carried out in another order or parallel to each other.

A person skilled in the art will gather from the above and the following description that unless otherwise notified, in addition to any combination of features belonging to one type of subject-matter also any combination between features relating to different subject-matter is considered to be disclosed with this application.

The aspects described above and further aspects, features and advantages of the invention may also be found in the example embodiments which are described in the following with reference to the appended drawings.

### Brief description of the drawings

Fig. 1 shows a rain detection device according to the prior art.
Fig. 2 shows a rain detection device according to an exemplary embodiment of the invention.
Fig. 3 shows light sources, an ambient light sensor, and a light guide according to an exemplary embodiment of the invention.
Fig. 4 shows a vehicle with a rain detection device according to an exemplary embodiment of the invention.
Fig. 5 shows a flowchart for a method according to an exemplary embodiment of the invention.

It has to be noted that the figures can be drawn schematically and not true to scale. Any reference signs in the claims should not be construed as limiting the scope of the claims.

### Detailed description of exemplary embodiments

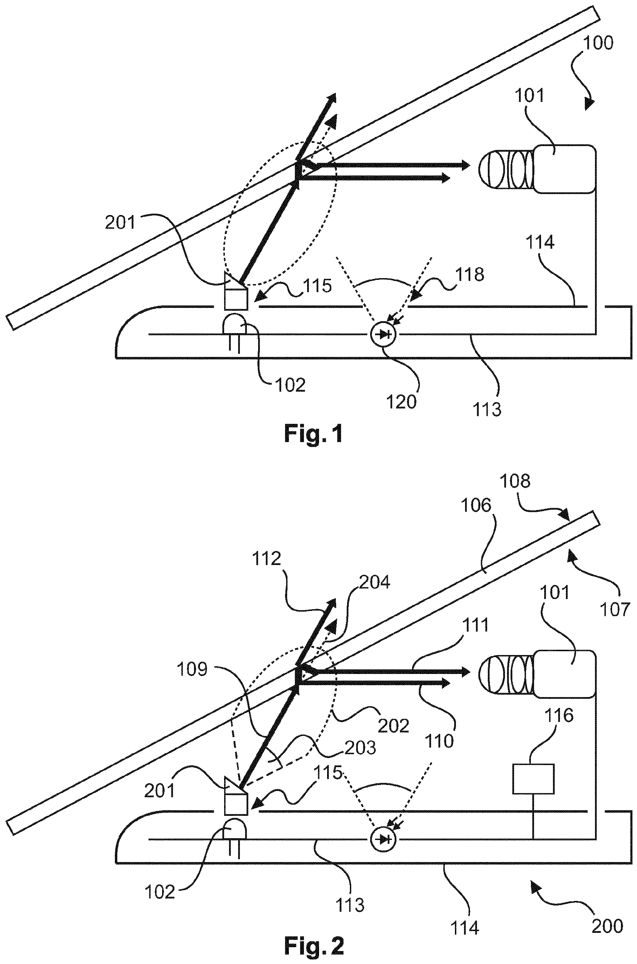

Fig. 1 shows a rain detection device 100 comprising a camera 101, a light source 102, and a light guide 201 according to the prior art. The light source 102 and the light sensor 120 are disposed on a printed circuit board 113, which is located in a housing 114. The housing 114 comprises two openings 115 and 118. The first opening 115 comprises guide 201 for guiding light from the light source 102 to the windscreen and the second opening 118 is configured for letting in ambient light to the ambient light sensor 120.

Fig. 2 shows a rain detection device 200 according to an exemplary embodiment of the invention. The rain detection device 200 can be installed in a vehicle and can be part of a driver assistance system of the vehicle.

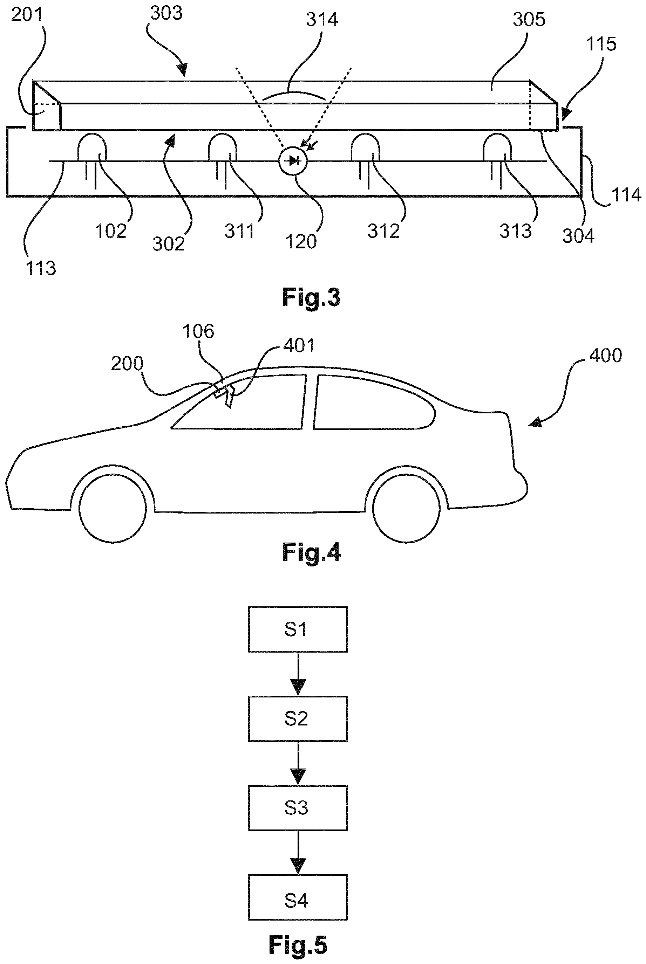

The rain detection device 200 comprises a camera 101 and a light source 102, and a light guide 201 optically connected to the light source 102. Moreover, the rain detection device 200 comprises a light sensor which is located behind the light source and is not shown in this figure. However, the relative locations of light source and the light sensor can be gathered from Fig. 3. The camera 101 is a front facing camera installed in a vehicle and is directed to a windscreen 106 of a vehicle. The light source 102, the light sensor, and the camera 101 are connected to a printed circuit board 113 of the rain detection device 200. Moreover, the printed circuit board 113 with the light source 102 and the light sensor is integrated in a housing 114 for dust and moisture protection and for enhancing electromagnetic compatibility. The housing 114 has an opening 115, through which the light guide 201 is configured to emit the light cone 202. Moreover, ambient light from the vehicle can be directed through the opening and be guided by the light guide 201 to the ambient light sensor. In addition, a processing unit 116 for rain detection is connected to the circuit board.

The light guide 201 is configured for emitting the light cone 202having a peak intensity 109 along a tilted direction 204 and having an opening angle 203. For example, the windscreen 106 is illuminated by the light source 102 and the light guide 201 with an emitting pattern or light cone 202 having a half width of 120 degrees, wherein the half width corresponds to the opening angle 203 of the light cone 202. In this way, a major part of the light cone 203 is directed to a rain detection area on the windshield 106. The correct angle for the redirected light cone 202 may depend on the relative angle between windscreen 106 and camera 101. The light guide 201 is at least partially embedded into the opening 115 of the housing. Furthermore, the light guide 201 is optically coupled to the light source 102 and to the ambient light sensor, i.e. the light cone of the light source is guided through the light guide 201 and ambient light is guided to the ambient light sensor.

Furthermore, first and second reflections 110 and 111 as well as a transmission 112 of the light cone 202 are caused. In particular, the portion 109 of the light is reflected from the inside surface 107 and the outside surface 108 of the windscreen 106 of the vehicle. In this way, first reflection 110 and second reflection 111 of the light cone 103 are caused. Moreover, a transmission component 112 of the light cone 103 is transmitted through the windscreen 108. The camera 101 is configured for detecting the first and second reflections 110 and 111. The camera 101 is configured for registering the reflections 110 and 111 of the light cone 103 on the correct part of the image area of the camera 101, which part is used for rain detection. Rain drops on the windscreen 106 will create variations to the outside second reflection 111, which will be detected by the camera 101 and/or the processing unit 116. The camera 101 and/or the processing unit 116 may assume that the inside first reflection 110 is substantially constant and may use the first reflection 110 for calibration of the rain detection device 200 or as a reference for calculating the change in the second reflection 111.

In Fig. 3 a perspective view of a drawing of a light guide 201 according to an exemplary embodiment is shown. As can be gathered, the light guide 201 is a solid state structure with a prism-like shape. The light guide 201 comprises a coupling side 302 for being coupled to a light source and an exit side 303 for emitting the redirected light cone of the light source or light sources. The coupling side 302 comprises a first surface 304 and the exit side 303 comprises a second surface 305. The length of the light guide can be, for example, between 3 cm and 4 cm and the width of the light guide can be roughly 0.7 cm. The height of the lower side of the light guide 201 is roughly 3 mm and the height of the elevated side is roughly 5 mm. The coupling side 302 may comprise a structure for coupling the light of the light source more effectively, for example a Fresnel lens. The second surface 305 of the exit side 303 may comprise a structure for scattering the redirected light cone and for producing a light cone with a continuous and homogenous intensity, for example micro structures. This causes a large homogenous illuminating area on the light guide exit surface. Hence, a large area on the windscreen or window of the vehicle can be illuminated by the light guide, resulting in a larger rain detection area.

Furthermore, a housing 114 of a rain detection device is shown. The light guide 201 is at least partly embedded in an opening 115 of the housing. A printed circuit board 113 comprising four light sources 102, 311, 312 and 313 as well as a light sensor 120 is located in the housing. The light sources 102, 211, 312 and 313 as well as the light sensor 120 are located below the light guide 201 and are optically coupled to the light guide 201 such that light from the light sources is emitted to the windscreen and ambient light is guided to the light sensor 120. The light guide 201 is further configured such that the light sensor has an effective opening angle 314 of 50 degrees or more.

Fig. 4 shows a vehicle 400 according to an exemplary embodiment of the invention having a windscreen 106 and a rain detection device 200 which is located between the interior mirror 401 and the windscreen. The rain detection device includes the features described herein.

Fig. 5 shows a flow chart for a method according to an exemplary embodiment of the invention. The method comprises the step S1 of emitting light with a light source in the vehicle and the step S2 of redirecting the light emitted by the light source to a region of a windshield or window of the vehicle by a light guide. Furthermore, the method includes the step S3 of recording an image of the region of the windshield or window by a camera for rain detection and the step S4 of measuring an ambient light level by a light sensor, wherein ambient light is directed to the light sensor by the light guide.

## Claims

1. Rain detection device (200) for a vehicle (400), the rain detection device comprising:
a camera (101);
a light source (102) for emitting light for rain detection;
a light sensor (120) for measuring an ambient light level;
a light guide (201);
wherein the light guide (201) is configured for redirecting the light emitted by the light source; the rain detection device being **characterised in that** the light guide (201) is configured for directing ambient light to the light sensor.

2. Rain detection device (200) according to claim 1,
wherein the light guide (201) comprises a coupling side (302) and an exit side (303);
wherein the coupling side is optically coupled to the light source (102) and the light sensor (120);
wherein the light guide is configured for guiding light emitted by the light source from the coupling side to the exit side; and
wherein the light guide is configured for guiding ambient light from the exit side to the coupling side and further to the light sensor.

3. Rain detection device (200) according to claim 1 or 2, the rain detection device further comprising:
a housing (114) having an opening (115);
wherein the light source and the light sensor are disposed inside the housing;
wherein the light guide is configured to guide the light emitted by the light source through said opening; and
wherein the light guide is configured to guide ambient light through said opening to the light source.

4. Rain detection device (200) according to any one of the preceding claims,
wherein the rain detection device (200) is configured to only measure an ambient light level by the light sensor (120) when the light source (102) is turned off.

5. Rain detection device (200) according to claim 4, wherein the rain detection device is configured for switching on and off the light sensor for rain detection with a frequency greater or equal to 4 Hz.

6. Rain detection device (200) according to any one of the preceding claims,
wherein the rain detection device is configured for calibrating the light sensor by means of a calibration factor; and
wherein the calibration factor takes into account transmission losses of the light guide (201).

7. Rain detection device (200) according to any one of the preceding claims,
wherein the light sensor (120) is a photodiode; and
wherein the light source (102) is a light-emitting diode.

8. Rain detection device (200) according to any one of the preceding claims, wherein the light guide (201) is configured such that the light sensor has an effective opening angle (314) amounting to at least 50 degrees.

9. Rain detection device (200) according to any one of the preceding claims, wherein the light guide is formed out of transparent plastic, preferably Polycarbonate.

10. Vehicle (400), comprising:
a windscreen or a window (106);
a rain detection device (200) according to any one of the preceding claims,
wherein the light source (102), the light guide (201), and the camera (101) are arranged and configured such that the light emitted by the light guide is redirected to a region of a windscreen or window (106) of the vehicle.

11. Vehicle (400) according to claim 10, the rain detection device (200) further comprising:
a processing unit (116);
wherein the light source (102), the light guide (201), and the camera (101) are arranged and configured such that a first reflection (110) of the emitted light is reflected from an inner side (107) of the windscreen or window to the camera (101);
wherein the light source (102), the light guide (201), and the camera (101) are arranged and configured such that a second reflection (111) of the light emitted by the light source is reflected from an outer side (108) of the windscreen or window to the camera (101); and
wherein the processing unit is configured for detecting rain based on a change in the second reflection (111) of the emitted light recorded by the camera (101).

12. Vehicle (400) according to claim 11, wherein the processing unit (116) is configured for calibrating the rain detection device based on the first reflection of the emitted light.

13. Vehicle (400) according to any one of claims 10 to 12, the vehicle further comprising:
a driver assistance system;
wherein the driver assistance system is configured for using the ambient light level measured by the light sensor (120) for headlamp control, display illumination control, head-up display settings, and/or tunnel recognition.

14. Vehicle (400) according to any one of claims 11 to 14,
wherein the camera (101) is part of a driver assistance system (200) of the vehicle;
wherein the camera (101) is further configured for recording a driver assistance image; and
wherein the light source (102), the light guide (201), and the camera (101) are configured such that reflections of the emitted light from the windscreen or window (106) and the driver assistance image do not overlap.

15. Method for detecting rain in a vehicle, the method comprising the steps:
emitting light in the vehicle by a light source (S1);
redirecting the light emitted by the light source to a region of a windshield or window of the vehicle by a light guide (S2);
recording an image of the region of the windshield or window by a camera for rain detection (S3); and
measuring an ambient light level by a light sensor (S4);
wherein ambient light is directed to the light sensor by the light guide.

## Patentansprüche

1. Regendetektionsvorrichtung (200) für ein Fahrzeug (400), wobei die Regendetektionsvorrichtung Folgendes umfasst:
eine Kamera (101);
eine Lichtquelle (102) zum Aussenden von Licht zur Regendetektion;
einen Lichtsensor (120) zum Messen einer Umgebungshelligkeit;
einen Lichtleiter (201);
wobei der Lichtleiter (201) so ausgelegt ist, dass er das von der Lichtquelle ausgesendete Licht umleitet;
wobei die Regendetektionsvorrichtung **dadurch gekennzeichnet ist, dass** der Lichtleiter (201) so ausgelegt ist, dass er Umgebungslicht zum Lichtsensor leitet.

2. Regendetektionsvorrichtung (200) nach Anspruch 1,
wobei der Lichtleiter (201) eine Einkopplungsseite (302) und eine Austrittsseite (303) umfasst;
wobei die Einkopplungsseite optisch mit der Lichtquelle (102) und dem Lichtsensor (120) gekoppelt ist;
wobei der Lichtleiter so ausgelegt ist, dass er von der Lichtquelle ausgesendetes Licht von der Einkopplungsseite zur Austrittsseite leitet; und
wobei der Lichtleiter so ausgelegt ist, dass er Umgebungslicht von der Austrittsseite zur Einkopplungsseite und weiter zum Lichtsensor leitet.

3. Regendetektionsvorrichtung (200) nach Anspruch 1 oder 2, wobei die Regendetektionsvorrichtung ferner Folgendes umfasst:
ein Gehäuse (114) mit einer Öffnung (115);
wobei die Lichtquelle und der Lichtsensor im Gehäuse angeordnet sind;
wobei der Lichtleiter so ausgelegt ist, dass er das von der Lichtquelle ausgesendete Licht durch die Öffnung leitet; und
wobei der Lichtleiter so ausgelegt ist, dass er Umgebungslicht durch die Öffnung zum Lichtsensor leitet.

4. Regendetektionsvorrichtung (200) nach einem der vorhergehenden Ansprüche,
wobei die Regendetektionsvorrichtung (200) so ausgelegt ist, dass er nur dann eine Umgebungshelligkeit mit dem Lichtsensor (120) misst, wenn die Lichtquelle (102) abgeschaltet ist.

5. Regendetektionsvorrichtung (200) nach Anspruch 4, wobei die Regendetektionsvorrichtung so ausgelegt ist, dass sie den Lichtsensor zur Regendetektion mit einer Frequenz größer gleich 4 Hz ein- und ausschaltet.

6. Regendetektionsvorrichtung (200) nach einem der vorhergehenden Ansprüche,
wobei die Regendetektionsvorrichtung so ausgelegt ist, dass sie den Lichtsensor mit einem Kalibrierfaktor kalibriert; und
wobei der Kalibrierfaktor Übertragungsverluste des Lichtleiters (201) berücksichtigt.

7. Regendetektionsvorrichtung (200) nach einem der vorhergehenden Ansprüche,
wobei der Lichtsensor (120) eine Photodiode ist; und
wobei die Lichtquelle (102) eine Leuchtdiode ist.

8. Regendetektionsvorrichtung (200) nach einem der vorhergehenden Ansprüche, wobei der Lichtleiter (201) so ausgelegt ist, dass der Lichtsensor einen effektiven Öffnungswinkel (314) von mindestens 50 Grad aufweist.

9. Regendetektionsvorrichtung (200) nach einem der vorhergehenden Ansprüche, wobei der Lichtleiter aus transparentem Kunststoff, vorzugsweise Polycarbonat, geformt ist.

10. Fahrzeug (400), umfassend:
eine Windschutzscheibe oder ein Fenster (106);
eine Regendetektionsvorrichtung (200) nach einem der vorhergehenden Ansprüche,
wobei die Lichtquelle (102), der Lichtleiter (201) und die Kamera (101) so angeordnet und ausgelegt sind, dass das vom Lichtleiter ausgesendete Licht zu einem Bereich einer Windschutzscheibe oder eines Fensters (106) des Fahrzeugs umgeleitet wird.

11. Fahrzeug (400) nach Anspruch 10, wobei die Regendetektionsvorrichtung (200) ferner Folgendes umfasst:
eine Verarbeitungseinheit (116);
wobei die Lichtquelle (102), der Lichtleiter (201) und die Kamera (101) so angeordnet und ausgelegt sind, dass eine erste Reflexion (110) des ausgesendeten Lichts von einer Innenseite (107) der Windschutzscheibe oder des Fensters zur Kamera (101) reflektiert wird;
wobei die Lichtquelle (102), der Lichtleiter (201) und die Kamera (101) so angeordnet und ausgelegt sind, dass eine zweite Reflexion (110) des von der Lichtquelle ausgesendeten Lichts von einer Außenseite (108) der Windschutzscheibe oder des Fensters zur Kamera (101) reflektiert wird; und
wobei die Verarbeitungseinheit so ausgelegt ist, dass sie Regen anhand einer Veränderung der zweiten Reflexion (111) des ausgesendeten Lichts erfasst, die von der Kamera (101) aufgenommen wird.

12. Fahrzeug (400) nach Anspruch 11, wobei die Verarbeitungseinheit (116) so ausgelegt ist, dass sie die Regendetektionsvorrichtung auf Grundlage der ersten Reflexion des ausgesendeten Lichts kalibriert.

13. Fahrzeug (400) nach einem der Ansprüche 10 bis 12, wobei das Fahrzeug ferner Folgendes umfasst:
ein Fahrerassistenzsystem;
wobei das Fahrerassistenzsystem so ausgelegt ist, dass es die vom Lichtsensor (120) gemessene Umgebungshelligkeit zur Scheinwerfersteuerung, Steuerung der Anzeigenbeleuchtung, für Einstellungen des Head-up-Displays und/oder zur Tunnelerkennung verwendet.

14. Fahrzeug (400) nach einem der Ansprüche 11 bis 14,
wobei die Kamera (101) Bestandteil eines Fahrerassistenzsystems (200) des Fahrzeugs ist;
wobei die Kamera (101) ferner so ausgelegt ist, dass sie ein Fahrerassistenzbild aufnimmt; und
wobei die Lichtquelle (102), der Lichtleiter (201) und die Kamera (101) so ausgelegt sind, dass Reflexionen des ausgesendeten Lichts von der Windschutzscheibe oder dem Fenster (106) und das Fahrerassistenzbild sich nicht überlappen.

15. Verfahren zum Erfassen von Regen in einem Fahrzeug, wobei das Verfahren folgende Schritte umfasst:
Aussenden von Licht im Fahrzeug mit einer Lichtquelle (S1);
Umleiten des von der Lichtquelle ausgesendeten Lichts auf einen Bereich einer Frontscheibe oder eines Fensters des Fahrzeugs mit einem Lichtleiter (S2);
Aufnehmen eines Bilds des Bereichs der Frontscheibe oder des Fensters mit einer Kamera zur Regendetektion (S3); und
Messen einer Umgebungshelligkeit mit einem Lichtsensor (S4);
wobei Umgebungslicht vom Lichtleiter zum Lichtsensor geleitet wird.

## Revendications

1. Dispositif de détection de pluie (200) pour un véhicule (400), ledit dispositif de détection de pluie comprenant :
une caméra (101) ;
une source lumineuse (102) destinée à émettre une lumière pour la détection de pluie ;
un capteur de luminosité (120) destiné à mesurer un degré de luminosité ambiante ;
un guide optique (201) ;
le guide optique (201) étant prévu pour rediriger la lumière émise par la source lumineuse ; ledit dispositif de détection de pluie étant **caractérisé en ce que**
le guide optique (201) est prévu pour guider la lumière ambiante vers le capteur de luminosité.

2. Dispositif de détection de pluie (200) selon la revendication 1,
où le guide optique (201) comprend un côté de couplage (302) et un côté de sortie (303) ;
où le côté de couplage est couplé optiquement à la source lumineuse (102) et au capteur de luminosité (120) ;
où le guide optique est prévu pour guider la lumière émise par la source lumineuse du côté de couplage vers le côté de sortie ; et
où le guide optique est prévu pour guider la lumière ambiante du côté de sortie vers le côté de couplage puis vers le capteur de luminosité.

3. Dispositif de détection de pluie (200) selon la revendication 1 ou 2, ledit dispositif de détection de pluie comprenant en outre :
un boîtier (114) présentant une ouverture (115) ;
la source lumineuse et le capteur de luminosité étant disposés à l'intérieur du boîtier ;
le guide optique étant prévu pour guider la lumière émise par la source lumineuse au travers de l'ouverture ; et
le guide optique étant prévu pour guider la lumière ambiante au travers de l'ouverture vers la source lumineuse.

4. Dispositif de détection de pluie (200) selon l'une des revendications précédentes,
où le dispositif de détection de pluie (200) est prévu pour mesurer seulement un degré de luminosité ambiante par le capteur de luminosité (120) quand la source lumineuse (102) est éteinte.

5. Dispositif de détection de pluie (200) selon la revendication 4, où le dispositif de détection de pluie est prévu pour activer et désactiver le capteur de luminosité pour détecter la pluie avec une fréquence supérieure ou égale à 4 Hz.

6. Dispositif de détection de pluie (200) selon l'une des revendications précédentes,
où le dispositif de détection de pluie est prévu pour étalonner le capteur de luminosité au moyen d'un facteur d'étalonnage; et
où le facteur d'étalonnage tient compte des pertes de transmission du guide optique (201).

7. Dispositif de détection de pluie (200) selon l'une des revendications précédentes,
où le capteur de luminosité (120) est une photodiode ; et
où la source lumineuse (102) est une diode électroluminescente.

8. Dispositif de détection de pluie (200) selon l'une des revendications précédentes, où le guide optique (201) est prévu de sorte que le capteur de luminosité présente un angle d'ouverture (314) effectif s'élevant à au moins 50 degrés.

9. Dispositif de détection de pluie (200) selon l'une des revendications précédentes, où le guide optique est constitué de plastique transparent, préférentiellement de polycarbonate.

10. Véhicule (400), comprenant :
un pare-brise ou une fenêtre (106) ;
un dispositif de détection de pluie (200) selon l'une des revendications précédentes,
où la source lumineuse (102), le guide optique (201), et la caméra (101) sont disposés et prévus de sorte que la lumière émise par le guide optique est redirigée vers une zone d'un pare-brise ou d'une fenêtre (106) du véhicule.

11. Véhicule (400) selon la revendication 10, le dispositif de détection de pluie (200) comprenant en outre :
une unité de traitement (116) ;
où la source lumineuse (102), le guide optique (201), et la caméra (101) sont disposés et prévus de sorte qu'une première réflexion (110) de la lumière émise est réfléchie depuis une face intérieure (107) du pare-brise ou de la fenêtre vers la caméra (101) ;
où la source lumineuse (102), le guide optique (201), et la caméra (101) sont disposés et prévus de sorte qu'une deuxième réflexion (111) de la lumière émise par la source lumineuse est réfléchie depuis une face extérieure (108) du pare-brise ou de la fenêtre vers la caméra (101) ; et
où l'unité de traitement est prévue pour détecter la pluie sur la base d'une variation de la deuxième réflexion (111) de la lumière émise enregistrée par la caméra (101).

12. Véhicule (400) selon la revendication 11, où l'unité de traitement (116) est prévue pour étalonner le dispositif de détection de pluie sur la base de la première réflexion de la lumière émise.

13. Véhicule (400) selon l'une des revendications 10 à 12, ledit véhicule comprenant en outre :
un système d'assistance au conducteur ;
le système d'assistance au conducteur étant prévu pour exploiter le degré de luminosité ambiante mesuré par le capteur de luminosité (120) pour commander les phares, l'éclairage de tableau de bord, les réglages d'affichage tête haute et/ou la détection de tunnel.

14. Véhicule (400) selon l'une des revendications 11 à 14, où la caméra (101) faite partie d'un système d'assistance au conducteur (200) du véhicule ;
où la caméra (101) est en outre prévue pour enregistrer une image d'assistance au conducteur ; et
où la source lumineuse (102), le guide optique (201), et la caméra (101) sont prévus de sorte que des réflexions de la lumière émise par le pare-brise ou la fenêtre (106) et l'image d'assistance au conducteur ne se chevauchent pas.

15. Procédé de détection de pluie sur un véhicule, ledit procédé comprenant les étapes suivantes :
émission de lumière dans le véhicule par une source lumineuse (S1) ;
redirection par un guide optique (S2) de la lumière émise par la source lumineuse vers une zone d'un pare-brise ou d'une fenêtre du véhicule;
enregistrement d'une image de la zone du pare-brise ou de la fenêtre par une caméra pour la détection de pluie (S3) ; et
mesure d'un degré de luminosité ambiante par un capteur de luminosité (S4) ;
la lumière ambiante étant guidée par le guide optique vers le capteur de luminosité.
